# EUROPEAN PATENT APPLICATION

(11) **EP 2 159 992 A1**
(43) Date of publication of application: **03.03.2010**
(21) Application number: 08425574.4
(22) Date of filing: 26.08.2008
(51) Int. Cl.: H04L 29/08, H04W 4/02

(54) **Method for the transmission and the management of personal data and information among mobile devices**

(71) Applicant: Gold Thomas David Località Monti del Lago S.N.C., 01036 Nepi (VT) (IT)
(72) Inventor: Gold Thomas David Località Monti del Lago S.N.C., 01036 Nepi (VT) (IT)
(74) Representative: Spadaro, Marco

(57) **Abstract**

A method and a system for the transmission and the management of personal data and information among mobile devices (100) such as cellular phones, provided with wireless communication means, allow to contact and find mobile devices users matching well defined customizable characteristics, the characteristics being notifiable to the user by the steps of: associating each mobile device with an ID value and storing it in a server (3); associating each ID value with user related information; defining a working range (2) for said registered mobile devices, inside which a data transmission/reception can occur; defining search parameters of the information relating to the user of the registered mobile device; transmitting data among two or more registered mobile devices if it is allowed by the overlapping of the respective working ranges; establishing the respect of rules set by the users and acquiring said user characterizing information if they match said search parameters.

## Description

The present invention refers to a method for the transmission and the management of personal data and information among mobile devices.

Modern mobile communication units are normally provided with wireless communication means, in particular through Bluetooth® technology, and with graphical units allowing to display multimedia information.

Therefore, one of the possibility offered by these mobile units, consists of the possibility for several users to communicate and to exchange information therebetween by Bluetooth® technology.

Nevertheless, the main problem related to the use of such technology in the exchanging of data is related to the fact that it does not allow neither to filter the kind of information exchanged, nor to select the sender or the receiver of the message sent or to send.

More precisely, the exchange of information by Bluetooth® technology normally occurs automatically as soon as a mobile unit enters the working range of a further device.

For evident reasons, this feature is not pleasant for the user, since it involves the risk of receiving undesired information, or even information harmful for the normal operation of the software of the phone. In order to avoid this drawback, applications to be used on mobile units allowing to filter the messages or the senders from which the information are sent, have been developed. In this way it is possible to use the transmission of messages and information between wireless communication systems for various kind of commercial and social applications.

Examples of these applications are offered by the sending of advertisements to a group of selected receivers, or by the exchange of messages and information among groups of people being part of a single network.

Such way of exchanging information is normally carried out by installing on a mobile unit a software allowing, by way of example, to exchange information with a group of registered users by the following steps:
- creating a user profile and registering it on a apposite server;
- after the registration took place, the application will be able to find units registered with matching profiles in the proximity of the unit wherein the software is installed;
- when the mobile unit finds matching profiles, it vibrates so as to notify the user of the presence of such profile;
- then, the user can see the matching profile and contact him or her anonymously, by sending him or her a message.

Nevertheless, this system is not enough flexible, since it only allows to search a profile matching to the registered one and, therefore, offers only limited possibility of selecting and contacting different users.

Moreover, the notification by vibration of the presence of a profile may result hardly practical for the user, since he has to check his or her unit anytime a matching profile is met.

In fact, it is evident that such application is not suitable for uses among a huge number of people, having different characteristics - and therefore different profiles - since they will obtain too many and not significant notifications.

Hence, the technical problem underlying the present invention is to provide a method for the transmission and the management of personal data and information among mobile devices allowing to overcome the drawbacks mentioned above with reference to the known art.

Such a problem is solved by the method for the transmission and the management of personal data and information among mobile devices according to claim 1 and by the software for the implementation thereof on mobile devices according to claim 9.

The present invention provides several relevant advantages. The main advantage lies in that the method according to the present invention allows to contact and find mobile devices' users matching well defined characteristic, such characteristic being customizable and modifiable by the mobile device's user himself or herself. Moreover, the method allows to obtain information in a manner which is not intrusive for the user, so that it can be used in every situation or environment.

Other advantages, features and the operation modes of the present invention will be made apparent from the following detailed description of some embodiments thereof, given by way of a non-limiting example. Reference will be made to the figures of the annexed drawings, wherein:
figure 1 is schematic illustration showing the operation of the method according to the present invention; and
figure 2 is a flow chart relating to the method according to the present invention.

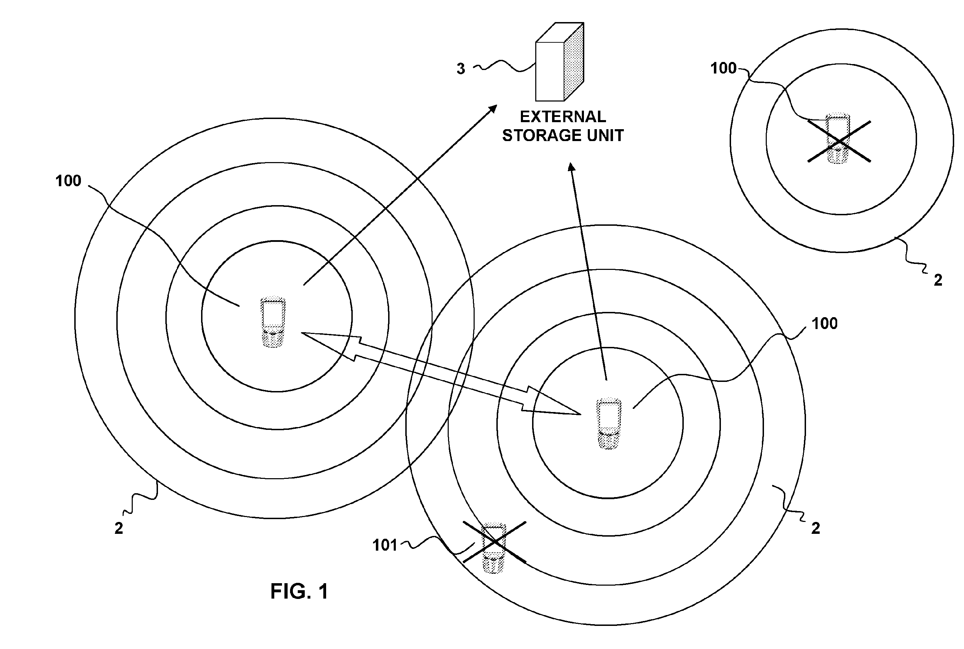

The method according to the present invention execute the transmission and the management of personal data and information among mobile devices, referred in figure 1 with the reference 100.

By way of example, such mobile devices 100 could be cellular phones provided with wireless communication means. Moreover such cellular phones may preferably allow the installation of a software for implementing the method according to the present invention. Anyhow, it is known that modern cellular phones are provided with a Bluetooth® communication system allowing a wireless communication suitable for the objects of the present invention, and can install Java applications, thus also allowing to use the software implementing the method according to the present invention.

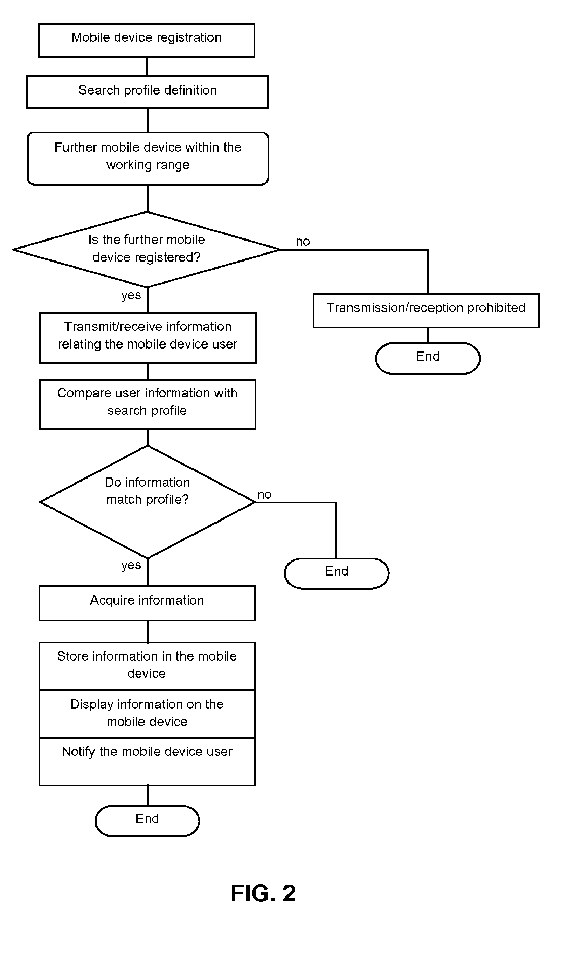

With reference to figure 2, the method comprises a first step of registering the mobile device 100 in a suitable database. The step of registering the mobile device 100 is achieved by associating the mobile device 100 with an ID value. The ID value will be stored in an external remote storage unit, shown with the reference 3 in figure 1. The storage unit may be realized, e. g., by a server 3 into which all mobile devices 100 ID values are stored.

More in detail, the ID value may be a user name created by the user of the mobile device 100, e. g., by entering a suitable Web portal.

Then, the software installed on the mobile device 100 will require the identification of the user by entering his or her user name, and therefore associating the mobile device 100 with a specific user registered in the database of the storage unit 3.

This operation can be executed by associating an icon with the mobile device application menu, eventually requiring the user to provide a user name and a password to have access to this specific application, for the sake of security.

A plurality of user ID values will be stored inside the server 3 and, as a consequence, a plurality of IDs of mobile devices used by them. Accordingly, it will be created a virtual community of users capable of exchanging information by means of the method according to the present invention and according to the steps described in the following.

For a better expository clarity, in the following, a mobile device 100 registered in the server 3 will be indicated as registered mobile device 100 and the user thereof will be indicated as registered user, whilst, on the contrary, a mobile device that is not present in the server will be identified as unregistered mobile device 101 and the user thereof as unregistered user.

More in detail, if the mobile device 100 is a cellular phone, it is already provided with an element identifying the user identity, i.e. the telephone provider SIM card stored in the cellular phone and the user identity will be therefore registered on the server 3 by the identity of the SIM card, i.e. the telephone number univocally assigned by the telephone provider to the user.

It is however intended that the mobile device could be any portable device different from a telephone, e.g. a dedicated device provided with communication means, e.g. of the Bluetooth® kind, and eventually capable of Internet connection by user identification through a system differing from cellular telephony, e.g. through Wi-Fi® or Wi-Max® communication protocols.

These dedicated devices may be exclusively customized for this system, and eventually integrated within other objects, like gadgets and the like, e.g. key rings, portable videogames and so on.

In addition to the definition of a user name, the registration phase also comprises a step of associating a series of information related to the user of the respective mobile device 100 with every ID value. Such information could be directed, e.g., to identify the user in a more detailed way, e.g. specifying his or her gender, age, place of residence, but also his or her job, hobbies, interest etc.

Therefore, when a mobile device 100 has been associated to the matching ID value within the server 3, such personal information will allow to provide more details related to the user thereof, and, in general, to better identify the contacted user.

Then, with reference again to figure 1, mobile devices 100 wireless communication means defines a working range 2, within which data transmission/reception may be executed by said wireless communication means. In the case of Bluetooth® systems the region will be defined by the range thereof, namely the working range thereof, i.e. the maximum distance inside which the device will be able to communicate with other mobile devices.

It is intended that the Bluetooth® communication system may be substituted by any equivalent system, allowing to transmit data from a mobile device to another, and comprising a function of automatic recognition of these devices when they enter within the respective working range of the wireless communication system.

When two distinct mobile devices 100 overlap their working ranges 2, these could communicate therebetween and realize a data exchange. In particular, the method according to the present invention provides that the data exchange automatically occurs when said working ranges 2 overlaps, i.e. when a mobile device lies inside the working range of the other device and vice versa. More precisely, such data exchange will be apt to verify whether the ID value of the further mobile device 100 is registered or not in the server 3.

As a consequence, and with reference to figure 2, when the respective working ranges 2 of two mobile devices is overlapped, e.g. because the users are close enough therebetween, a data exchange will be executed among mobile devices so that every device acquires the ID value of the others. Then, when the mobile devices 100 obtain said values, they will verify if the value is registered within the server 3.

This verification may be executed both by contacting the server 3 and by using particular formats for the data exchanged among mobile devices 100, allowing to recognize whether the device is registered within the server 3 or not.

Thus, if both the mobile devices 100 are registered, they will be able to execute further data and information communication exchange by respective wireless communication means, whilst, on the contrary, further communication among devices will be preferably prohibited. As a consequence, as soon as a mobile device is identified as non registered within the server, it will not be able to communicate with the registered mobile devices 100 even if it is inside their working range 2.

Analogously, and for obvious reasons, a mobile device 100, which working range 2 is not overlapped to the working range 2 of further registered devices 100, will not execute any data communication.

Therefore, the user of a registered mobile device 100 will be able to execute information transmission/reception with users of further registered mobile devices 100.

Nevertheless, the method according to the present invention comprised a further step of defining some search parameter of the information relating to the user of the mobile device 100, for each mobile device. Accordingly, it will be able to create a filter of the information acquired by the wireless communication means. In fact, the methods according to the state of the art does not allow any kind of filtering and, as a consequence, they are often excessively intrusive for the user.

On the contrary, the method according to the present invention provides the possibility of setting some search parameters, e.g. according to the previously listed personal information. Always by way of example, the user might indicate gender, age, interests etc. as search preferences, and distinguish data transmissions/receptions according to said parameters.

More in detail, the method according to the present invention comprises a step of executing a transmission/reception among two or more registered mobile devices 100, if their respective working ranges are at least partially overlapped, in a such way that it transmit/receive user related information of the mobile device 100. After receiving such information, they are compared to the search parameters previously defined and if the information are acquired if they match what is set by the search parameters.

As shown in figure 2, information acquiring may occur in several ways, e.g. by displaying the information on a graphical display of the mobile device, by notifying the user through a sound message or a vibration of the device, or even by storing the acquired information in a suitable register. It is also evident that these acquiring methods could be used combined therebetween.

In particular, it is particularly advantageous the possibility of storing the acquired information in a suitable register. In particular, it could be simply stored the user ID value in the register, being then possible to obtain the personal information by even subsequently querying the server 3. Moreover, the hour and place of the executed exchange of information could be advantageously stored, so that it is possible to recognize the situation wherein the exchange of information took place.

For example, a PC link system could be then provided for entering the register in which the above mentioned data are stored and thus look over the users met, the personal information thereof matching the set search parameters.

The method according to the present invention could be then implemented by a software that could installed on the mobile device, allowing to achieve all the previously described steps directly with the mobile device. Alternatively, some steps, among which, e.g., the registration of the user and the subsequent displaying of the register, could be done with a PC or with a Web access created therefor.

Therefore, the method according to the present invention allows to be able to exchange information relating to users only if they match with preset parameters and, accordingly, it allows to be able to contact only desired users.

Parameters, or rules, could be anything. Their typology could be re-set within the system or defined by users, e.g. by using keywords.

Accordingly, the possibility for the users to coming into contact will be subordinated to the matching of rules anyhow set by the users themselves.

Then, every user could contact and/or be contacted by other users according to shared rules, i.e. social interests, requirements of various nature, specific interests and so on. For example, this system could be employed for dating purpose, in order to create not only a virtual community but also a real one, since a direct contact between users will be also allowed if agreed, and so on.

Obviously, the system administrator could interfere in the content of the rules in order to avoid the infringement of public safety rules.

The exchanged information could be also used not only for coming into contact with other people belonging to the community registered in the server 3 but it will be also possible to propose other services, e.g., proposing products or services within his or her profile.

The present invention has hereto been described with reference to preferred embodiments thereof. It is understood that there could be other embodiments referable to the same inventive kernel, all falling within the protective scope of the claims set forth hereinafter.

## Claims

1. A method for the transmission and the management of personal data and information among mobile devices, said mobile devices comprising wireless communication means, comprising the steps of:
- associating every mobile device (100) with an ID value;
- storing every ID value of said devices (100) in an external storage unit (3) in order to execute a registration of said mobile devices (100) in an suitable database;
- associating every ID value with information relating to the user of the respective registered mobile device (100);
- defining a working range (2) for said registered mobile devices (100), inside which a data transmission/reception can by executed by said wireless communication means;
- for each registered mobile device (100), defining search parameters of the information relating to the user of the registered mobile device (100);
- executing a transmission/reception among two or more registered mobile devices (100) having the respective working ranges (2) overlapped, said transmission/reception being apt to transmit/receive said information relating to the user of the mobile device;
- comparing said information relating to the user of the registered mobile device (100) with said previously defined search parameters; and
- acquiring said information relating to the user if they match said search parameters.

2. The method according to claim 1, wherein said step of associating said mobile device (100) with an ID value is achieved by assigning a user name to the user of said mobile device (100).

3. The method according to any of the preceding claims, comprising further steps of transmitting/receiving respective ID values of mobile devices (100), the working ranges (2) thereof being at least partially overlapped and to verify the presence of said ID value in said storage unit (3) in order to permit the transmission/reception of said user related information.

4. The method according to any of the preceding claims, wherein said step of acquiring said information comprises a further step of storing said ID value in a register.

5. The method according to any of the preceding claims, wherein said step of acquiring said information comprises a further step of displaying said information in a graphical display of said mobile device (100).

6. The method according to any of the preceding claims, wherein said step of acquiring said information comprises a further step of notifying said mobile device (100) user by sound message or a vibration.

7. The method according to any of the preceding claims, wherein said step of executing said transmission/reception of said information relating to the user of the mobile device (100) takes place by communicating with said external storage unit (3).

8. The method according to any of the preceding claims, wherein said wireless communication means comprises a Bluetooth® communication system, said working range (2) being defined by the working range thereof.

9. A software for implementing on a mobile device the method according any of claims 1 to 8.
